(19) Europäisches Patentamt / European Patent Office / Office européen des brevets

(11) **EP 3 277 018 B1**

(12) **EUROPEAN PATENT SPECIFICATION**

(45) Date of publication and mention
of the grant of the patent:
**26.08.2020  Bulletin 2020/35**

(21) Application number: **15888150.8**

(22) Date of filing: **09.04.2015**

(51) Int Cl.:
*H04W 48/02* (2009.01)     *H04W 36/16* (2009.01)
*H04W 36/22* (2009.01)     *H04W 36/30* (2009.01)
*H04W 36/08* (2009.01)

(86) International application number:
**PCT/CN2015/076149**

(87) International publication number:
**WO 2016/161593 (13.10.2016 Gazette 2016/41)**

(54) **ADMISSION CONTROL METHOD AND NETWORK EQUIPMENT**

VERFAHREN ZUR ZULASSUNGSSTEUERUNG UND NETZWERKAUSRÜSTUNG

PROCÉDÉ DE CONTRÔLE D'ADMISSION ET ÉQUIPEMENT DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.01.2018  Bulletin 2018/05**

(73) Proprietor: **Huawei Technologies Co. Ltd.
Shenzhen, Guangdong 518129 (CN)**

(72) Inventors:
  • **SUN, Shaofeng
    Shenzhen
    Guangdong 518129 (CN)**
  • **YAO, Yao
    Shenzhen
    Guangdong 518129 (CN)**
  • **LIU, Lin
    Shenzhen
    Guangdong 518129 (CN)**

(74) Representative: **Pfenning, Meinig & Partner mbB
Patent- und Rechtsanwälte
Joachimsthaler Straße 10-12
10719 Berlin (DE)**

(56) References cited:
    EP-A1- 1 796 413          WO-A1-2013/032738
    WO-A1-2014/117348      CN-A- 101 765 140
    CN-A- 101 772 067        CN-A- 103 037 439
    CN-A- 103 796 276

• BEARD C C ET AL: "Connection admission
  control for differentiating priority traffic on public
  networks", MILCOM 1999. IEEE MILITARY
  COMMUNICATIONS. CONFERENCE
  PROCEEDINGS (CAT. NO.99CH36341) IEEE
  PISCATAWAY, NJ, USA, IEEE, vol. 2, 31 October
  1999 (1999-10-31), pages 1401-1408,
  XP010369770, DOI:
  10.1109/MILCOM.1999.821434 ISBN:
  978-0-7803-5538-5

EP 3 277 018 B1

## Description

### TECHNICAL FIELD

Embodiments of the present invention relate to the field of communications technologies, and in particular, to an admission control method and a network device.

### BACKGROUND

In a mobile communications system, each online user in a dedicated connected state needs to send control information to maintain connectivity to a network even if there is no service data to be transmitted. The control information needs to occupy some wireless air interface resources. In addition, if a user has service data to be transmitted, the service data also needs to consume some wireless air interface resources. However, wireless air interface resources in a system are limited. When there are a large quantity of online users in a dedicated connected state in the system, wireless air interface resource congestion occurs, and a series of problems are caused. For example, control information of a large quantity of online users occupies many wireless air interface resources, and there are fewer wireless air interface resources available for service data transmission. Consequently, a user service data transmission rate decreases, users' service experience is poor, and a cell throughput also declines. In view of this, an admission control technology based on an air interface resource emerges. In the admission control technology, services are usually classified according to a required quality of service (Quality of Service, QoS). For example, services are classified into voice services, streaming services, high delay-sensitive interactive services, rate-guaranteed services, and best-effort services. An admission threshold is set for each type of service. When a user requests access, a QoS of a requested service is carried. An RNC determines, according to the QoS, whether a quantity of connected users requesting the type of service is greater than an admission threshold of the type of service. If the quantity of connected users requesting the type of service is not greater than the admission threshold of the type of service, access is allowed; otherwise, access is rejected.

The foregoing admission control method has some problems. For example, a QoS-based classification method cannot be well corresponding to an actual service type in some occasions. For example, according to the QoS-based classification method, a video stream played on a web page is considered as a high delay-sensitive interactive service instead of a streaming service. In this case, an admission threshold of the video stream may be set inappropriately, affecting user experience. In addition, an admission threshold is separately set for each type of service, and admission of the type of users is controlled according to only a QoS-based service admission threshold of a service requested by a user. That is, only a satisfaction of a user requesting the type of service is considered, and a satisfaction of a user requesting another service in a cell is not considered. Consequently, users requesting a particular type of service may constantly connect, cell air interface resource congestion occurs, and the user requesting another type of service is unable to connect.

To ensure the user admission fairness, there is another admission control method. That is, one admission threshold is set for all types of services in a cell. In a process of controlling user access, an even gain of a system is calculated according to a reward value of a service. The admission threshold is dynamically adjusted according to the even gain of the system. When the system accepts a call, the system is rewarded, and when the system rejects a call or a resource is wasted due to inappropriate admission threshold settings, the system is punished, to reduce a congestion rate for new calls and a handover call interruption rate. A main objective of this admission control method is to reduce a congestion rate for new calls and a handover call interruption rate, and to allow more users to connect to a network. Therefore, service experience of a connected user in a cell is usually ignored, and service experience of the connected user is usually extremely poor. Moreover, when there are a large quantity of online users, control information occupies many air interface resources, resulting in a decline in a cell throughput and user data transmission efficiency.

WO 2013/032738 A1 proposes modifying admission control thresholds based on a weighted average of delay and/or packet loss rates accumulated for a time.

### SUMMARY

In view of this, embodiments of the present invention provide an admission control method and a network device according to the independent claims, to improve user data transmission efficiency, a cell throughput, and a users' service satisfaction while ensuring the user admission fairness.

The invention is defined by the subject-matter of the independent claims. Particular embodiments of the invention are set out in the dependent claims. In the following, any use of the word "embodiment" diverging from the claims has to be understood as an example for the illustration of the invention.

It can be learned from the foregoing technical solutions that the embodiments of the present invention have the following advantages:

In the embodiments of the present invention, an overall service satisfaction of a cell is first calculated in first preset duration, where the overall service satisfaction of the cell is a weighted sum of satisfactions with all types of services in the cell. Then, an admission threshold adjustment amount is calculated based on a difference between the overall service satisfaction of the cell and an overall satisfaction target value. A first admission threshold of the cell is changed to a second admission threshold according to the admission threshold adjustment amount. When a terminal requests to connect to the cell, admission control is performed on the terminal according to the second admission threshold. That is, in the embodiments of the present invention, a same admission threshold is used for all terminals requesting to connect to the cell, and therefore, the user admission fairness can be ensured. In a process of controlling user access, an admission threshold is dynamically adjusted according to an overall service satisfaction, to improve a users' service satisfaction, user data transmission efficiency, and a cell throughput.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is a schematic diagram of an embodiment of a network device according to the present invention;
FIG. 2 is a schematic diagram of another embodiment of a network device according to the present invention;
FIG. 3 is a schematic diagram of another embodiment of a network device according to the present invention;
FIG. 4 is a schematic diagram of another embodiment of a network device according to the present invention;
FIG. 5 is a schematic diagram of an embodiment of an admission control method according to the present invention; and
FIG. 6 is a schematic diagram of an embodiment of a load control method according to the present invention.

## DESCRIPTION OF EMBODIMENTS

The following describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

Currently, a network device usually sets an admission threshold, that is, an initial admission threshold, for each cell according to a network load capability. In a terminal access process, the network device dynamically adjusts the admission threshold according to an average system gain. However, in this way, a series of problems are caused, including extremely poor users' service experience in the cell, a low cell throughput, and low user data transmission efficiency. In specific implementation, the network device may be a radio network controller (Radio Network Controller, RNC) or a base station NodeB. This is not specifically limited herein.

In view of this, the embodiments of the present invention provide an admission control method, a load control method, and a network device, to improve user data transmission efficiency, a cell throughput, and a users' service satisfaction while ensuring the user admission fairness.

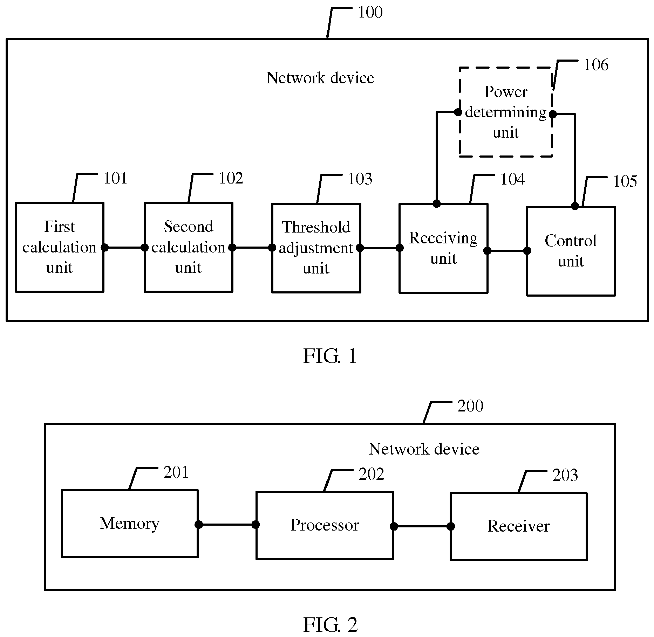

Referring to FIG. 1, an embodiment of a network device according to the present invention includes:

a first calculation unit 101, configured to calculate an overall service satisfaction of a cell in first preset duration, where the overall service satisfaction of the cell is a weighted sum of satisfactions with all types of services in the cell;
a second calculation unit 102, configured to calculate an admission threshold adjustment amount based on a difference between the overall service satisfaction of the cell and an overall satisfaction target value;
a threshold adjustment unit 103, configured to change a first admission threshold of the cell to a second admission threshold according to the admission threshold adjustment amount;
a receiving unit 104, configured to receive an access request sent by a terminal; and
a control unit 105, configured to perform admission control on the terminal according to the second admission threshold.

In addition, the network device in this embodiment may further include a power determining unit 106. The power determining unit 106 is configured to: after the receiving unit 104 receives the access request sent by the terminal, obtain a downlink transmit power average of the cell that is in second preset duration, and determine whether the downlink transmit power average is greater than a downlink transmit power congestion threshold. The second preset duration is less than the first preset duration. If the downlink transmit power average is greater than the downlink transmit power congestion threshold, the control unit 105 performs admission control on the terminal according to the second admission threshold. If the downlink transmit power average is not greater than the downlink transmit power congestion threshold, the control unit 105 performs no admission control on the terminal.

In specific implementation, the network device may classify applications according to application property. For example, applications may be classified into voice services, video services, web services, file download, file upload, and instant messaging (Instant Messaging, IM) services. The first calculation unit 101 calculates satisfactions with all types of services in the first preset duration. A satisfaction with each type of service is a ratio of a quantity of satisfied call detail records of the type of service to a total quantity of call detail records of the type of service. The first calculation unit 101 performs a weighted sum on the satisfactions with all the types of services in the cell to obtain the overall service satisfaction of the cell. The first calculation unit 101 usually calculates the overall service satisfaction of the cell when a total quantity of call detail records of all services in the current cell is greater than or equal to a preset threshold of a total quantity of call detail records, and usually does not calculate the overall service satisfaction of the cell when a total quantity of call detail records is less than the preset threshold of the total quantity of call detail records.

Specifically, the first calculation unit 101 may determine a satisfied call detail record of each type of service in the following manner.

For a voice service, the first calculation unit 101 may compare a mean opinion score (Mean Opinion Score, MOS) of a current call detail record with a voice service satisfaction threshold. If the MOS of the current call detail record is greater than the voice service satisfaction threshold, the first calculation unit 101 determines that the current call detail record is a satisfied call detail record; otherwise, the first calculation unit 101 determines that the current call detail record is an unsatisfied call detail record.

For a video service, the first calculation unit 101 may compare an initial buffer delay indicator, a pause proportion indicator, or an average throughput carried in a current call detail record with a video service satisfaction threshold (such as a delay threshold or a throughput threshold). If the initial buffer delay indicator or the pause proportion indicator carried in the current call detail record is less than a delay threshold, or the average throughput carried in the current call detail record is greater than a throughput threshold, the first calculation unit 101 determines that the current call detail record is a satisfied call detail record; otherwise, the first calculation unit 101 determines that the current call detail record is an unsatisfied call detail record.

For a web service, the first calculation unit 101 may compare a web page display delay indicator or an average web page download rate of a current call detail record with a web service satisfaction threshold (such as a delay threshold or a download rate threshold). If the web page display delay indicator of the current call detail record is less than a delay threshold, or the average web page download rate of the current call detail record is greater than a download rate threshold, the first calculation unit 101 determines that the current call detail record is a satisfied call detail record; otherwise, the first calculation unit 101 determines that the current call detail record is an unsatisfied call detail record.

For a file download service, the first calculation unit 101 may compare an average download rate displayed on a current call detail record with a file download service satisfaction threshold. If the average download rate displayed on the current call detail record is greater than the file download service satisfaction threshold, the first calculation unit 101 determines that the current call detail record is a satisfied call detail record; otherwise, the first calculation unit 101 determines that the current call detail record is an unsatisfied call detail record.

For a file upload service, the first calculation unit 101 may compare an average upload rate displayed on a current call detail record with a file upload service satisfaction threshold. If the average upload rate displayed on the current call detail record is greater than the file upload service satisfaction threshold, the first calculation unit 101 determines that the current call detail record is a satisfied call detail record; otherwise, the first calculation unit 101 determines that the current call detail record is an unsatisfied call detail record.

For an IM service, the first calculation unit 101 may compare a delay or a sending success rate displayed on a current call detail record with an IM service satisfaction threshold (such as a delay threshold or a success rate threshold). If the delay displayed on the current call detail record is less than a delay threshold, or the sending success rate is greater than a success rate threshold, the first calculation unit 101 determines that the current call detail record is a satisfied call detail record; otherwise, the first calculation unit 101 determines that the current call detail record is an unsatisfied call detail record.

After determining a satisfied call detail record of each type of service, the first calculation unit 101 may calculate the overall service satisfaction of the cell according to the following formula.

That is, the first calculation unit 101 calculates the overall service satisfaction of the cell according to a formula

$$Q = \frac{\sum_i a_i \lambda_i}{\sum_i k_i \beta_i} \quad \text{or} \quad Q = \sum_i \frac{a_i \lambda_i}{k_i \beta_i} \, , \quad \text{where} \quad \sum_i a_i = 1 \, , \quad \sum_i k_i = 1 \, ,$$ $Q$ is the overall service satisfaction of the cell, $i$ is a service type, $\lambda_i$ is a quantity of satisfied call detail records of an $i^{th}$ type of service, $a_i$ is a weight of the quantity of satisfied call detail records of the $i^{th}$ type of service, $\beta_i$ is a total quantity of call detail records of the $i^{th}$ type of service, and $k_i$ is a weight of the total quantity of call detail records of the $i^{th}$ type of service.

The second calculation unit 102 calculates the admission threshold adjustment amount based on the difference between the overall service satisfaction obtained through calculation by the first calculation unit 101 and the overall satisfaction target value.

Specifically, the second calculation unit 102 may first calculate the difference between the overall service satisfaction of the cell and the overall satisfaction target value according to a formula $x = Q - Q_0$, where $x$ is the difference, $Q$ is the overall service satisfaction, and $Q_0$ is the overall satisfaction target value.

Then, the second calculation unit 102 calculates the admission threshold adjustment amount according to a formula $f(x) = \sum_j n_j * x^j$ , where f($x$) is the admission threshold adjustment amount, $j$ is an integer, and $n_j$ is a coefficient of a term $x^j$

Alternatively, the second calculation unit 102 calculates the admission threshold adjustment amount according to a formula $$f(x) = \begin{cases} \sum_j p_j * x^j, A_0 \le x < A_1 \\ \sum_j l_j * x^j, A_1 \le x < A_2 \\ \quad \cdots\cdots \\ \sum_j m_j * x^j, A_{N-1} \le x < A_N \end{cases} ,$$ where $A_0$ to $A_N$ are specific values of the difference, $p_j$ is a

coefficient of a term $x^j$ in a range [$A_0$, $A_1$), $l_j$ is a coefficient of the term $x^j$ in a range [$A_1$, $A_2$), and $m_j$ is a coefficient of the term $x^j$ in a range [$A_{N-1}$, $A_N$).

In the foregoing two formulas for calculating an admission threshold adjustment amount, when the difference between the overall service satisfaction and the overall satisfaction target value is a positive number, an overall adjustment trend is to increase an admission threshold, and a greater difference between the overall service satisfaction and the overall satisfaction target value indicates a greater admission threshold adjustment amount. When the difference between the overall service satisfaction and the overall satisfaction target value is a negative number, an overall adjustment trend is to decrease an admission threshold, and a greater absolute value of the difference between the overall service satisfaction and the overall satisfaction target value indicates a greater absolute value of the admission threshold adjustment amount.

After the second calculation unit 102 obtains the admission threshold adjustment amount, the threshold adjustment unit 103 changes the first admission threshold of the cell to the second admission threshold according to the admission threshold adjustment amount. Specifically, the threshold adjustment unit 103 may obtain the second admission threshold according to a formula $\eta_2 = \eta_1 + f(x)$, where $\eta_2$ is the second admission threshold, $\eta_1$ is the first admission threshold, and f($x$) is the admission threshold adjustment amount.

It should be noted that when the admission threshold of the cell is adjusted for the first time, the first admission threshold may be an initial admission threshold. In a second, a third, or later adjustment process, the first admission threshold may be an admission threshold obtained in a most recent adjustment.

The receiving unit 104 receives the access request sent by the terminal. The access request is used to request access to the current cell. After the receiving unit 104 receives the access request sent by the terminal, the power determining unit 106 first obtains the downlink transmit power average of the cell that is in the second preset duration, and determines whether the downlink transmit power average is greater than the downlink transmit power congestion threshold (that is, a short-time downlink transmit power congestion threshold). The second preset duration is less than the first preset duration. If the downlink transmit power average is greater than the downlink transmit power congestion threshold, it indicates that a resource of the current cell is insufficient, and the power determining unit 106 triggers the control unit 105 to perform admission control on the terminal according to the second admission threshold, to limit a quantity of terminals connected to the current cell and improve a service satisfaction of an online terminal. If the downlink transmit power average is not greater than the downlink transmit power congestion threshold, it indicates that a resource of the current cell is sufficient, and the control unit 105 does not perform admission control on the terminal. That is, connecting by the terminal is allowed, to fully utilize the cell resource.

Specifically, a process in which the control unit 105 performs admission control on the terminal according to the second admission threshold may be as follows: The control unit 105 may obtain status-related information of an online terminal in the current cell, compare the obtained status-related information of the online terminal in the current cell with the second admission threshold, and if the status-related information of the online terminal in the current cell is less than the second admission threshold, allow the terminal to connect; otherwise, not allow the terminal to connect. The status-related information may be a quantity of online terminals in a CELL_DCH state in the current cell, a quantity of online radio bearers (radio bearer, RB) in a CELL_DCH state with a packet switch (Packet Switch, PS) best effort (Best Effort, BE) service in the current cell, or a quantity of online activated RBs in a CELL_DCH state with a PS BE service in the current cell.

When the control unit 105 performs admission control according to the second admission threshold, if the terminal is not allowed to connect to the current cell, the control unit 105 may process, in any one of the following manners, the terminal that is not allowed to connect to the current cell: setting the terminal that is not allowed to connect to the current cell to a CELL_FACH state, a CELL_PCH state, or a URA_PCH state; setting the terminal that is not allowed to connect to the current cell to an IDLE state; or redirecting the terminal that is not allowed to connect to the current cell to a neighboring cell of the current cell, to reduce control resources occupied by the terminal.

In addition, when the overall service satisfaction of the cell is not calculated (for example, the total quantity of call detail records of all services in the current cell is less than the preset threshold of the total quantity of call detail records), if an admission rejection based on the first admission threshold occurs, or a downlink transmit power average of the cell in the first preset duration is less than or equal to a long-time downlink transmit power congestion threshold and an admission rejection based on the first admission threshold occurs, the first admission threshold may be changed to a third admission threshold. Then, admission control is performed according to the third admission threshold.

Specifically, the first admission threshold may be changed to the third admission threshold in the following methods.

First: A constant threshold adjustment amount is added to the first admission threshold to obtain the third admission threshold.

Second: A variable threshold adjustment amount is added to the first admission threshold to obtain the third admission threshold. The variable threshold adjustment amount may be determined by the following piecewise polynomial function based on a quantity of admission rejections:

$$\mathrm{f}(y) = \begin{cases} \sum_j p_j * y^j, & A_0 \leq y < A_1 \\ \sum_j l_j * y^j, & A_1 \leq y < A_2 \\ \qquad \cdots\cdots \\ \sum_j m_j * y^j, & A_{N-1} \leq y < A_N \end{cases} ,$$

where

f($y$) is the variable threshold adjustment amount, $A_0$ to $A_N$ are specific values of the quantity of admission rejections, $p_j$ is a coefficient of a term $y^j$ in a range $[A_0, A_1)$, $l_j$ is a coefficient of a term $y^j$ in a range $[A_1, A_2)$, and $m_j$ is a coefficient of a term $y^j$ in a range $[A_{N-1}, A_N)$. In the formula, a larger quantity of admission rejections indicates a larger variable threshold adjustment amount.

In this embodiment, a first calculation unit first calculates an overall service satisfaction of a cell in first preset duration, where the overall service satisfaction of the cell is a weighted sum of satisfactions with all types of services in the cell. Then, a second calculation unit calculates an admission threshold adjustment amount based on a difference between the overall service satisfaction of the cell and an overall satisfaction target value. A threshold adjustment unit changes a first admission threshold of the cell to a second admission threshold according to the admission threshold adjustment amount. After a receiving unit receives an access request sent by a terminal, a control unit performs admission control on the terminal according to the second admission threshold. That is, in this embodiment of the present invention, a same admission threshold is used for all terminals requesting to connect to the cell, and therefore, the user admission fairness can be ensured. In a process of controlling user access, a threshold adjustment unit dynamically adjusts an admission threshold according to an overall service satisfaction, so as to improve a users' service satisfaction, user data transmission efficiency, and a cell throughput.

Referring to FIG. 2, another embodiment of a network device according to the present invention includes: a memory 201, a processor 202, and a receiver 203. The processor 202 is configured to call a software program stored in the memory 201 to perform the following operations:

calculating an overall service satisfaction of a cell in first preset duration, where the overall service satisfaction of the cell is a weighted sum of satisfactions with all types of services in the cell;

calculating an admission threshold adjustment amount based on a difference between the overall service satisfaction of the cell and an overall satisfaction target value;

changing a first admission threshold of the cell to a second admission threshold according to the admission threshold adjustment amount;

controlling the receiver 203 to receive an access request sent by a terminal; and

performing admission control on the terminal according to the second admission threshold.

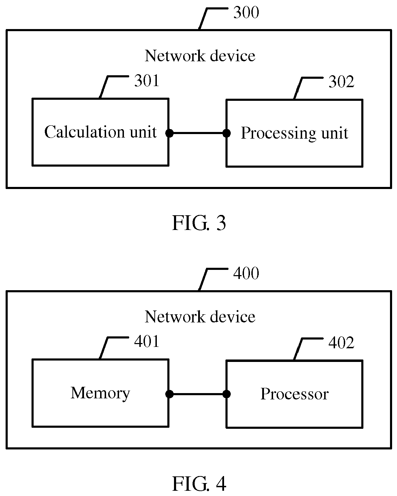

A network device used for admission control is described above. A network device used for load control is described in the following. Referring to FIG. 3, the network device in this embodiment includes:

a calculation unit 301, configured to calculate an overall service satisfaction of a cell in preset duration, where the overall service satisfaction of the cell is a weighted sum of satisfactions with all types of services in the cell; and

a processing unit 302, configured to: when the overall service satisfaction of the cell is less than a service experience minor congestion threshold and greater than a service experience severe congestion threshold, redirect a first preset quantity of first preset terminals in the cell to a neighboring cell satisfying a preset condition, where the first preset terminal includes a terminal in any state of a CELL_FACH state, a CELL_PCH state, or a URA_PCH state, and the neighboring cell satisfying the preset condition is a cell that is adjacent to the current cell and whose overall service satisfaction is greater than the service experience minor congestion threshold.

In specific implementation, for a method for calculating the overall service satisfaction of the current cell, reference may be made to descriptions in the foregoing embodiments, and details are not described herein again.

In practical application, a network device may usually set two service experience congestion thresholds for each cell, that is, a service experience minor congestion threshold and a service experience severe congestion threshold. A value of the service experience minor congestion threshold is usually between 0.7 and 0.8. A value of the service experience severe congestion threshold is usually between 0.3 and 0.4. If an overall service satisfaction of a cell is greater than the service experience minor congestion threshold, it indicates that a service satisfaction of a user in the cell is high. If an overall service satisfaction of a cell is less than the service experience minor congestion threshold and greater than the service experience severe congestion threshold, it indicates that a service satisfaction of a user in the cell is low. If an overall service satisfaction of a cell is less than the service experience severe congestion threshold, it indicates that a service satisfaction of a user in the cell is extremely low.

After the calculation unit 301 obtains through calculation the overall service satisfaction of the current cell, the processing unit 302 may compare the overall service satisfaction of the current cell with a set service experience congestion threshold. If the overall service satisfaction of the current cell is greater than the service experience minor congestion threshold, no adjustment is made. If the overall service satisfaction of the current cell is less than the service experience minor congestion threshold and greater than the service experience severe congestion threshold, the first preset quantity of first preset terminals in the current cell are redirected to the neighboring cell satisfying the preset condition. The first preset terminal includes the terminal in any state of a CELL_FACH state, a CELL_PCH state, or a URA_PCH state. The neighboring cell satisfying the preset condition is the cell that is adjacent to the current cell and whose overall service satisfaction is greater than the service experience minor congestion threshold. If there is no neighboring cell satisfying the preset condition, no adjustment is made.

If the overall service satisfaction of the current cell is less than the service experience severe congestion threshold, a second preset quantity of second preset terminals in the current cell are redirected to the neighboring cell satisfying the preset condition. The second preset terminal includes a terminal in any state of a CELL_DCH state, a CELL_FACH state, a CELL_PCH state, or a URA_PCH state. If there is no neighboring cell satisfying the preset condition, a third preset quantity of terminals in a CELL_DCH state in the current cell are set to a CELL_FACH state, a CELL_PCH state, a URA_PCH state, or an IDLE state.

It should be noted that according to the network device in this embodiment, after admission control is performed according to a prior-art method, load control may be performed based on an overall service satisfaction of a cell. Alternatively, after admission control is performed based on an overall service satisfaction of a cell according to the foregoing description in the present invention, load control may be performed according to the overall service satisfaction of the cell. This is not limited herein.

In this embodiment, a processing unit adjusts a load of a current cell according to an overall service satisfaction of the current cell, to improve a users' service satisfaction, user data transmission efficiency, and a cell throughput.

Referring to FIG. 4, another embodiment of a network device according to the present invention includes: a memory 401 and a processor 402. The processor 402 executes a software program stored in the memory 401 to perform the following operations:

calculating an overall service satisfaction of a cell in preset duration, where the overall service satisfaction of the cell is a weighted sum of satisfactions with all types of services in the cell; and

when the overall service satisfaction of the cell is less than a service experience minor congestion threshold and greater than a service experience severe congestion threshold, redirecting a first preset quantity of first preset terminals in the cell to a neighboring cell satisfying a preset condition, where the first preset terminal includes a terminal in any state of a CELL_FACH state, a CELL_PCH state, or a URA_PCH state, and the neighboring cell satisfying the preset condition is a cell that is adjacent to the cell and whose overall service satisfaction is greater than the service experience minor congestion threshold.

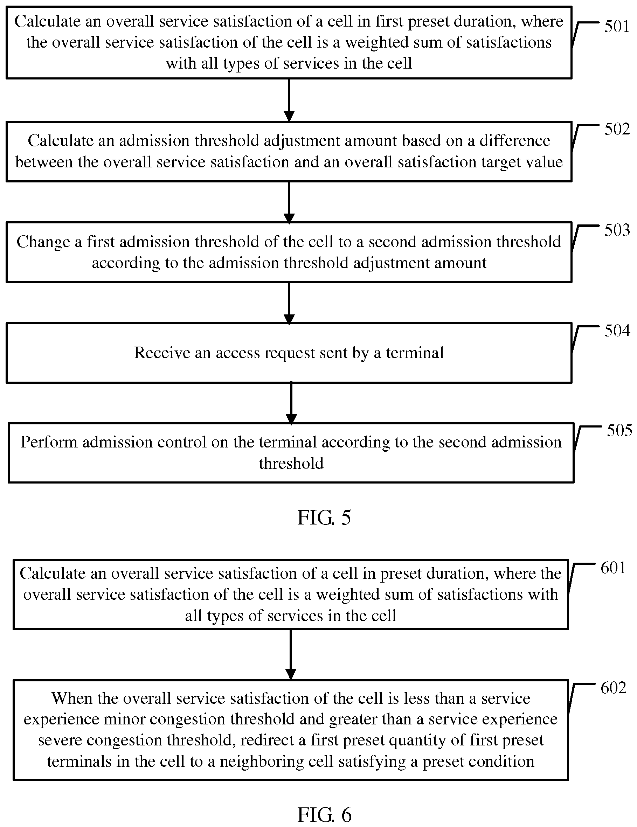

An admission control method provided in the present invention is described in the following. Referring to FIG. 5, the admission control method in this embodiment includes the following steps.

501. Calculate an overall service satisfaction of a cell in first preset duration, where the overall service satisfaction of the cell is a weighted sum of satisfactions with all types of services in the cell.

In specific implementation, a network device may classify applications according to application property. For example, applications may be classified into voice services, video services, web services, file download, file upload, and IM services. The satisfactions with all the types of services are calculated in the first preset duration. A satisfaction with each type of service is a ratio of a quantity of satisfied call detail records of the type of service to a total quantity of call detail records of the type of service. A weighted sum of the satisfactions with all the types of services is calculated to obtain the overall service satisfaction of the cell. The network device usually calculates the overall service satisfaction of the cell when a total quantity of call detail records of all services in the current cell is greater than or equal to a preset threshold of a total quantity of call detail records, and usually does not calculate the overall service satisfaction of the cell when a total quantity of call detail records is less than the preset threshold of the total quantity of call detail records.

Specifically, a satisfied call detail record of each type of service may be determined in the following manner.

For a voice service, a mean opinion score (Mean Opinion Score, MOS) of a current call detail record may be compared with a voice service satisfaction threshold. If the MOS of the current call detail record is greater than the voice service satisfaction threshold, it is determined that the current call detail record is a satisfied call detail record; otherwise, it is determined that the current call detail record is an unsatisfied call detail record.

For a video service, an initial buffer delay indicator, a pause proportion indicator, or an average throughput carried in a current call detail record may be compared with a video service satisfaction threshold (such as a delay threshold or a throughput threshold). If the initial buffer delay indicator or the pause proportion indicator carried in the current call detail record is less than a delay threshold, or the average throughput carried in the current call detail record is greater than a throughput threshold, it is determined that the current call detail record is a satisfied call detail record; otherwise, it is determined that the current call detail record is an unsatisfied call detail record.

For a web service, a web page display delay indicator or an average web page download rate of a current call detail record may be compared with a web service satisfaction threshold (such as a delay threshold or a download rate threshold). If the web page display delay indicator of the current call detail record is less than a delay threshold, or the average web page download rate of the current call detail record is greater than a download rate threshold, it is determined that the current call detail record is a satisfied call detail record; otherwise, it is determined that the current call detail record is an unsatisfied call detail record.

For a file download service, an average download rate displayed on a current call detail record may be compared with a file download service satisfaction threshold. If the average download rate displayed on the current call detail record is greater than the file download service satisfaction threshold, it is determined that the current call detail record is a satisfied call detail record; otherwise, it is determined that the current call detail record is an unsatisfied call detail record.

For a file upload service, an average upload rate displayed on a current call detail record may be compared with a file upload service satisfaction threshold. If the average upload rate displayed on the current call detail record is greater than the file upload service satisfaction threshold, it is determined that the current call detail record is a satisfied call detail record; otherwise, it is determined that the current call detail record is an unsatisfied call detail record.

For an IM service, a delay or a sending success rate displayed on a current call detail record may be compared with an IM service satisfaction threshold (such as a delay threshold or a success rate threshold). If the delay displayed on the current call detail record is less than a delay threshold, or the sending success rate is greater than a success rate threshold, it is determined that the current call detail record is a satisfied call detail record; otherwise, it is determined that the current call detail record is an unsatisfied call detail record.

After a satisfied call detail record of each type of service is determined, the overall service satisfaction of the cell may be calculated according to the following formula.

That is, the overall service satisfaction of the cell is calculated according to a formula $Q = \dfrac{\sum_i a_i \lambda_i}{\sum_i k_i \beta_i}$ or

$Q = \sum_i \dfrac{a_i \lambda_i}{k_i \beta_i}$, where $\sum_i a_i = 1$, $\sum_i k_i = 1$, Q is the overall service satisfaction of the cell, $i$ is a service type, $\lambda_i$

is a quantity of satisfied call detail records of an $i^{th}$ type of service, $a_i$ is a weight of the quantity of satisfied call detail records of the $i^{th}$ type of service, $\beta_i$ is a total quantity of call detail records of the $i^{th}$ type of service, and $k_i$ is a weight of the total quantity of call detail records of the $i^{th}$ type of service.

502. Calculate an admission threshold adjustment amount based on a difference between the overall service satisfaction of the cell and an overall satisfaction target value.

Specifically, the difference between the overall service satisfaction of the cell and the overall satisfaction target value may be first calculated according to a formula $x = Q - Q_0$, where $x$ is the difference, $Q$ is the overall service satisfaction, and $Q_0$ is the overall satisfaction target value.

Then, the admission threshold adjustment amount is calculated according to a formula $f(x) = \sum_j n_j * x^j$,

where f($x$) is the admission threshold adjustment amount, j is an integer, and $n_j$ is a coefficient of a term $x^j$.

Alternatively, the admission threshold adjustment amount is calculated according to a formula

$$f(x) = \begin{cases} \sum_j p_j * x^j, & A_0 \le x < A_1 \\ \sum_j l_j * x^j, & A_1 \le x < A_2 \\ \quad\cdots\cdots \\ \sum_j m_j * x^j, & A_{N-1} \le x < A_N \end{cases}$$ where $A_0$ to $A_N$ are specific values of the difference, $p_j$ is a coefficient of a term $x^j$ in a range $[A_0, A_1)$, $l_j$ is a coefficient of the term $x^j$ in a range $[A_1, A_2)$, and $m_j$ is a coefficient of the term $x^j$ in a range $[A_{N-1}, A_N)$.

In the foregoing two formulas for calculating an admission threshold adjustment amount, when the difference between the overall service satisfaction and the overall satisfaction target value is a positive number, an overall adjustment trend is to increase an admission threshold, and a greater difference between the overall service satisfaction and the overall satisfaction target value indicates a greater admission threshold adjustment amount. When the difference between the overall service satisfaction and the overall satisfaction target value is a negative number, an overall adjustment trend is to decrease an admission threshold, and a greater absolute value of the difference between the overall service satisfaction and the overall satisfaction target value indicates a greater absolute value of the admission threshold adjustment amount.

503. Change a first admission threshold of the cell to a second admission threshold according to the admission threshold adjustment amount.

Specifically, the second admission threshold may be obtained according to a formula $\eta_2 = \eta_1 + f(x)$, where $\eta_2$ is the second admission threshold, $\eta_1$ is the first admission threshold, and f($x$) is the admission threshold adjustment amount.

It should be noted that when the admission threshold of the cell is adjusted for the first time, the first admission threshold may be an initial admission threshold. In a second, a third, or later adjustment process, the first admission threshold may be an admission threshold obtained in a most recent adjustment.

504. Receive an access request sent by a terminal.

The access request is used to request access to the current cell.

505. Perform admission control on the terminal according to the second admission threshold.

In specific implementation, after the access request sent by the terminal is received, a downlink transmit power average of the cell in second preset duration may be first obtained, and whether the downlink transmit power average is greater than a downlink transmit power congestion threshold (that is, a short-time downlink transmit power congestion threshold) is determined. The second preset duration is less than the first preset duration. If the downlink transmit power average is greater than the downlink transmit power congestion threshold, it indicates that a resource of the current cell is insufficient, and admission control is performed on the terminal according to the second admission threshold, to limit a quantity of terminals connected to the current cell and improve a service satisfaction of an online terminal. If the downlink transmit power average is not greater than the downlink transmit power congestion threshold, it indicates that a resource of the current cell is insufficient, and no admission control may be performed on the terminal. That is, connecting by the terminal is allowed, to fully utilize the cell resource.

Specifically, a process in which admission control is performed on the terminal according to the second admission threshold may be as follows: Status-related information of an online terminal in the current cell may be obtained, the obtained status-related information of the online terminal in the current cell is compared with the second admission threshold, and if the status-related information of the online terminal in the current cell is less than the second admission threshold, the terminal is allowed to connect; otherwise, the terminal is not allowed to connect. The status-related information may be a quantity of online terminals in a CELL_DCH state in the current cell, a quantity of online radio bearers (radio bearer, RB) in a CELL_DCH state with a packet switch (Packet Switch, PS) best effort (Best Effort, BE) service in the current cell, or a quantity of online activated RBs in a CELL_DCH state with a PS BE service in the current cell.

When admission control is performed according to the second admission threshold, if the terminal is not allowed to connect to the current cell, the terminal that is not allowed to connect to the current cell may be processed in any one of the following manners: setting the terminal that is not allowed to connect to the current cell to a CELL_FACH state, a CELL_PCH state, or a URA_PCH state; setting the terminal that is not allowed to connect to the current cell to an IDLE state; or redirecting the terminal that is not allowed to connect to the current cell to a neighboring cell of the current cell, so as to reduce control resources occupied by the terminal.

In addition, when the overall service satisfaction of the cell is not calculated (for example, the total quantity of call detail records of all services in the current cell is less than the preset threshold of the total quantity of call detail records), if an admission rejection based on the first admission threshold occurs, or a downlink transmit power average of the cell in the first preset duration is less than or equal to a long-time downlink transmit power congestion threshold and an admission rejection based on the first admission threshold occurs, the first admission threshold may be changed to a third admission threshold. Then, admission control is performed according to the third admission threshold.

Specifically, the first admission threshold may be changed to the third admission threshold in the following methods.

First: A constant threshold adjustment amount is added to the first admission threshold to obtain the third admission threshold.

Second: A variable threshold adjustment amount is added to the first admission threshold to obtain the third admission threshold. The variable threshold adjustment amount may be determined by the following piecewise polynomial function based on a quantity of admission rejections:

$$\mathrm{f}(y) = \begin{cases} \sum_j p_j * y^j, & A_0 \le y < A_1 \\ \sum_j l_j * y^j, & A_1 \le y < A_2 \\ \quad\ldots\ldots \\ \sum_j m_j * y^j, & A_{N-1} \le y < A_N \end{cases},$$

where

f($y$) is the variable threshold adjustment amount, $A_0$ to $A_N$ are specific values of the quantity of admission rejections, $p_j$ is a coefficient of a term $y^j$ in a range $[A_0, A_1)$, $l_j$ is a coefficient of a term $y^j$ in a range $[A_1, A_2)$, and $m_j$ is a coefficient of a term $y^j$ in a range $[A_{N-1}, A_N)$. In the formula, a larger quantity of admission rejections indicates a larger variable threshold adjustment amount.

In this embodiment of the present invention, an overall service satisfaction of a cell is first calculated in first preset duration, where the overall service satisfaction of the cell is a weighted sum of satisfactions with all types of services in the cell. Then, an admission threshold adjustment amount is calculated based on a difference between the overall service satisfaction of the cell and an overall satisfaction target value. A first admission threshold of the cell is changed to a second admission threshold according to the admission threshold adjustment amount. After an access request sent by a terminal is received, admission control is performed on the terminal according to the second admission threshold. That is, in this embodiment of the present invention, a same admission threshold is used for all terminals requesting to connect to the cell, and therefore, the user admission fairness can be ensured. In a process of controlling user access, a threshold adjustment unit dynamically adjusts an admission threshold according to an overall service satisfaction, so as to improve a users' service satisfaction, user data transmission efficiency, and a cell throughput.

A load control method provided in the present invention is described in the following. Referring to FIG. 6, the load control method in this embodiment includes the following steps.

601. Calculate an overall service satisfaction of a cell in preset duration, where the overall service satisfaction of the cell is a weighted sum of satisfactions with all types of services in the cell.

In specific implementation, for a method for calculating the overall service satisfaction of the current cell, reference may be made to descriptions in the foregoing embodiments, and details are not described herein again.

602. When the overall service satisfaction of the cell is less than a service experience minor congestion threshold and greater than a service experience severe congestion threshold, redirect a first preset quantity of first preset terminals in the cell to a neighboring cell satisfying a preset condition, where the first preset terminal includes a terminal in any state of a CELL_FACH state, a CELL_PCH state, or a URA_PCH state, and the neighboring cell satisfying the preset condition is a cell that is adjacent to the cell and whose overall service satisfaction is greater than the service experience minor congestion threshold.

In practical application, a network device may usually set two service experience congestion thresholds for each cell, that is, a service experience minor congestion threshold and a service experience severe congestion threshold. A value of the service experience minor congestion threshold is usually between 0.7 and 0.8. A value of the service experience severe congestion threshold is usually between 0.3 and 0.4. If an overall service satisfaction of a cell is greater than the service experience minor congestion threshold, it indicates that a service satisfaction of a user in the cell is high. If an overall service satisfaction of a cell is less than the service experience minor congestion threshold and greater than the service experience severe congestion threshold, it indicates that a service satisfaction of a user in the cell is low. If an overall service satisfaction of a cell is less than the service experience severe congestion threshold, it indicates that a service satisfaction of a user in the cell is extremely low.

After the overall service satisfaction of the current cell is obtained through calculation, the overall service satisfaction of the current cell may be compared with a set service experience congestion threshold. If the overall service satisfaction of the current cell is greater than the service experience minor congestion threshold, no adjustment is made. If the overall service satisfaction of the current cell is less than the service experience minor congestion threshold and greater than the service experience severe congestion threshold, the first preset quantity of first preset terminals in the current cell are redirected to the neighboring cell satisfying the preset condition. The first preset terminal includes the terminal in any state of a CELL_FACH state, a CELL_PCH state, or a URA_PCH state. The neighboring cell satisfying the preset condition is the cell that is adjacent to the current cell and whose overall service satisfaction is greater than the service experience minor congestion threshold. If there is no neighboring cell satisfying the preset condition, no adjustment is made.

If the overall service satisfaction of the current cell is less than the service experience severe congestion threshold, a second preset quantity of second preset terminals in the current cell are redirected to the neighboring cell satisfying the preset condition. The second preset terminal includes a terminal in any state of a CELL_DCH state, a CELL_FACH state, a CELL_PCH state, or a URA_PCH state. If there is no neighboring cell satisfying the preset condition, a third preset quantity of terminals in a CELL_DCH state in the current cell are set to a CELL_FACH state, a CELL_PCH state, a URA_PCH state, or an IDLE state.

It should be noted that the load control method in this embodiment may be performed after admission control is performed according to a prior-art method, or may be performed after admission control is performed based on an overall service satisfaction of a cell according to the foregoing description in the present invention. This is not limited herein.

In this embodiment, a network device adjusts a load of a current cell according to an overall service satisfaction of the current cell, to improve a users' service satisfaction, user data transmission efficiency, and a cell throughput.

It may be clearly understood by persons skilled in the art that, for the purpose of convenient and brief description, for a detailed working process of the foregoing apparatus and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

**Claims**

1. A network device (100), comprising:

a first calculation unit (101), configured to calculate an overall service satisfaction of a cell in a first preset duration;
a second calculation unit (102), configured to calculate an admission threshold adjustment amount based on a difference between the overall service satisfaction of the cell and an overall satisfaction target value;
a threshold adjustment unit (103), configured to change a first admission threshold of the cell to a second admission threshold according to the admission threshold adjustment amount;
a receiving unit (104), configured to receive an access request sent by a terminal; and
a control unit (105), configured to perform admission control on the terminal according to the second admission threshold,
**characterized in that** the first calculation unit (101) is specifically configured to:

calculate the overall service satisfaction of the cell according to a formula $Q = \dfrac{\sum_i a_i \lambda_i}{\sum k_i \beta_i}$ or

$Q = \sum_i \dfrac{a_i \lambda_i}{k_i \beta_i}$, wherein $\sum_i a_i = 1$, $\sum_i k_i = 1$, $Q$ is the overall service satisfaction of the cell, $i$ is a service type, $\lambda_i$ is a quantity of satisfied call detail records of an $i^{\text{th}}$ type of service, $a_i$ is a weight of the quantity of satisfied call detail records of the $i^{\text{th}}$ type of service, $\beta_i$ is a total quantity of call detail records of the $i^{\text{th}}$ type of service, and $k_i$ is a weight of the total quantity of call detail records of the $i^{\text{th}}$ type of service, wherein the second calculation unit (102) is specifically configured to:
calculate the difference according to a formula $x = Q - Q_0$, wherein $x$ is the difference, $Q$ is the overall service satisfaction of the cell, and $Q_0$ is the overall satisfaction target value; and

calculate the admission threshold adjustment amount according to a formula $f(x) = \sum_j n_j * x^j$, wherein $f(x)$ is the admission threshold adjustment amount, $j$ is an integer, and $n_j$ is a coefficient of a term $x^j$; or

calculate the admission threshold adjustment amount according to a formula

$$f(x) = \begin{cases} \sum_j p_j * x^j, A_0 \leq x < A_1 \\ \sum_j l_j * x^j, A_1 \leq x < A_2 \\ \cdots\cdots \\ \sum_j m_j * x^j, A_{N-1} \leq x < A_N \end{cases},$$ wherein $A_0$ to $A_N$ are specific values of the difference, $p_j$ is a

coefficient of a term $x^j$ in a range $[A_0, A_1)$, $l_j$ is a coefficient of the term $x^j$ in a range $[A_1, A_2)$, and $m_j$ is a coefficient of the term $x^j$ in a range $[A_{N-1}, A_N)$.

2. The network device according to claim 1, wherein the threshold adjustment unit (103) is specifically configured to: calculate the second admission threshold according to a formula $\eta_2 = \eta_1 + f(x)$, wherein $\eta_2$ is the second admission threshold, $\eta_1$ is the first admission threshold, and f(x) is the admission threshold adjustment amount.

3. The network device according to any one of claims 1 and 2, wherein the network device further comprises: a power determining unit (106), configured to: after the receiving unit (104) receives the access request sent by the terminal, obtain a downlink transmit power average of the cell that is in second preset duration; determine whether the downlink transmit power average is greater than a downlink transmit power congestion threshold, wherein the second preset duration is less than the first preset duration; and if the downlink transmit power average is greater than the downlink transmit power congestion threshold, trigger the control unit (105) to perform admission control on the terminal according to the second admission threshold; or if the downlink transmit power average is not greater than the downlink transmit power congestion threshold, the control unit (105) doesn't perform admission control on the terminal.

4. The network device according to any one of claims 1 to 3, wherein when the control unit(105) performs admission control on the terminal according to the second admission threshold, if the terminal is not allowed to connect to the cell, the control unit (105) performs processing in any one of the following manners: setting the terminal that is not allowed to connect to the cell to a CELL_FACH state, a CELL_PCH state, or a URA_PCH state; setting the terminal that is not allowed to connect to the cell to an IDLE state; or redirecting the terminal that is not allowed to connect to the cell to a neighboring cell of the cell.

5. An admission control method, comprising:

calculating (501) an overall service satisfaction of a cell in a first preset duration;
calculating (502) an admission threshold adjustment amount based on a difference between the overall service satisfaction of the cell and an overall satisfaction target value;
changing (503) a first admission threshold of the cell to a second admission threshold according to the admission threshold adjustment amount;
receiving (504) an access request sent by a terminal; and
performing (505) admission control on the terminal according to the second admission threshold,
**characterized in that** a method for calculating the overall service satisfaction of the cell comprises:

calculating the overall service satisfaction of the cell according to a formula $Q = \dfrac{\sum_i a_i \lambda_i}{\sum_i k_i \beta_i}$ or

$Q = \sum_i \dfrac{a_i \lambda_i}{k_i \beta_i}$, wherein $\sum_i a_i = 1$, $\sum_i k_i = 1$, Q is the overall service satisfaction of the cell, $i$ is a

service type, $\lambda_i$ is a quantity of satisfied call detail records of an $i^{th}$ type of service, $a_i$ is a weight of the quantity of satisfied call detail records of the $i^{th}$ type of service, $\beta_i$ is the total quantity of call detail records of the $i^{th}$ type of service, and $k_i$ is the type-of-service specific weight of the total quantity of call detail records of the $i^{th}$ type of service, wherein the calculating an admission threshold adjustment amount based on a difference between the overall service satisfaction of the cell and an overall satisfaction target value comprises:

calculating the difference according to a formula $x = Q - Q_0$, wherein $x$ is the difference, $Q$ is the overall service satisfaction of the cell, and $Q_0$ is the overall satisfaction target value; and

calculating the admission threshold adjustment amount according to a formula $f(x) = \sum_{j} n_j * x^j$,

wherein f($x$) is the admission threshold adjustment amount, j is an integer, and $n_j$ is a coefficient of a term $x^j$; or

calculating the admission threshold adjustment amount according to a formula

$$f(x) = \begin{cases} \sum_{j} p_j * x^j, & A_0 \leq x < A_1 \\ \sum_{j} l_j * x^j, & A_1 \leq x < A_2 \\ \quad \cdots\cdots \\ \sum_{j} m_j * x^j, & A_{N-1} \leq x < A_N \end{cases}$$

wherein $A_0$ to $A_N$ are specific values of the difference, $p_j$ is a

coefficient of a term $x^j$ in a range $[A_0, A_1)$, $l_j$ is a coefficient of the term $x^j$ in a range $[A_1, A_2)$, and $m_j$ is a coefficient of the term $x^j$ in a range $[A_{N-1}, A_N)$.

6. The method according to claim 5, wherein the changing a first admission threshold of the cell to a second admission threshold according to the admission threshold adjustment amount comprises:

calculating the second admission threshold according to a formula $\eta_2 = \eta_1 + f(x)$, wherein $\eta_2$ is the second admission threshold, $\eta_1$ is the first admission threshold, and f($x$) is the admission threshold adjustment amount.

7. The method according to any one of claims 5 and 6, wherein after the receiving an access request sent by a terminal, further comprising:

obtaining a downlink transmit power average of the cell that is in second preset duration; and determining whether the downlink transmit power average is greater than a downlink transmit power congestion threshold, wherein the second preset duration is less than the first preset duration; and

if the downlink transmit power average is greater than the downlink transmit power congestion threshold, performing admission control on the terminal according to the second admission threshold; or

if the downlink transmit power average is not greater than the downlink transmit power congestion threshold, skipping performing admission control on the terminal.

**Patentansprüche**

1. Netzwerkvorrichtung (100), umfassend:

eine erste Berechnungseinheit (101), konfiguriert, eine Gesamtdiensterfüllung einer Zelle über eine erste voreingestellte Dauer zu berechnen;

eine zweite Berechnungseinheit (102), konfiguriert, basierend auf einer Differenz zwischen der Gesamtdiensterfüllung der Zelle und einem Gesamterfüllungs-Sollwert einen Zugangsschwellenwert-Anpassungsbetrag zu berechnen;

eine Schwellenwert-Anpassungseinheit (103), konfiguriert, auf der Grundlage des Zugangsschwellenwert-Anpassungsbetrags einen ersten Zugangsschwellenwert der Zelle in einen zweiten Zugangsschwellenwert zu ändern;

eine Empfangseinheit (104), konfiguriert, eine von einem Endgerät gesendete Zugangsanforderung zu empfangen; und

eine Steuereinheit (105), konfiguriert, nach dem zweiten Zugangsschwellenwert eine Zugangssteuerung an dem Endgerät durchzuführen,

**dadurch gekennzeichnet, dass** die erste Berechnungseinheit (101) spezifisch konfiguriert ist zum:

Berechnen der Gesamtdiensterfüllung der Zelle nach der Formel $Q = \dfrac{\sum_i a_i \lambda_i}{\sum_i k_i \beta_i}$ oder

$Q = \sum_i \dfrac{a_i \lambda_i}{k_i \beta_i}$, wobei: $\sum_i a_i = 1$, $\sum_i k_i = 1$, die Gesamtdiensterfüllung der Zelle ist, $i$, ein

Diensttyp ist, $\lambda_i$ eine Anzahl von Einträgen zu Details von erfüllten Anrufen eines $i$-ten Diensttyps ist, $a_i$ eine Gewichtung der Einträge zu Details von erfüllten Anrufen des i-ten Diensttyps ist, $\beta_i$ eine Gesamtzahl von Einträgen zu Details von Anrufen des i-ten Diensttyps ist und $k_i$ eine Gewichtung der Gesamtzahl von Einträgen zu Details von Anrufen des i-ten Diensttyps ist, wobei die zweite Berechnungseinheit (102) spezifisch konfiguriert ist zum:
Berechnen der Differenz anhand einer Formel $x = Q - Q_0$, wobei $x$ die Differenz ist, $Q$ die Gesamtdiensterfüllung der Zelle ist und $Q_0$ der Gesamtdiensterfüllungs-Sollwert ist; und

Berechnen des Zugangsschwellenwert-Anpassungsbetrags anhand einer Formel $f(x) = \sum_j n_j * x^j$, wobei f($x$) der Zugangsschwellenwert-Anpassungsbetrag ist, $j$ eine Ganzzahl ist und $n_j$ ein Koeffizient eines Terms $x^j$ ist; oder
Berechnen des Zugangsschwellenwert-Anpassungsbetrags anhand einer Formel

$$f(x) = \begin{cases} \sum_j p_j * x^j, & A_0 \le x < A_1 \\ \sum_j l_j * x^j, & A_1 \le x < A_2 \\ \quad \ldots\ldots \\ \sum_j m_j * x^j, & A_{N-1} \le x < A_N \end{cases}$$

wobei $A_0$ bis $A_N$ spezifische Werte der Differenz sind, $p_j$ ein Koeffizient eines Terms $x^j$ in einem Bereich [$A_0,A_1$) ist, $l_j$ ein Koeffizient des Terms $x^j$ in einem Bereich [$A_1,A_2$) ist und $m_j$ ein Koeffizient des Terms $x^j$ in einem Bereich [$A_{N-1},A_N$) ist.

2. Netzwerkvorrichtung nach Anspruch 1, wobei die Schwellenwert-Anpassungseinheit (103) spezifisch konfiguriert ist zum:
Berechnen des zweiten Zugangsschwellenwerts anhand einer Formel $\eta_2 = \eta_1 + f(x)$, wobei $\eta_2$ der zweite Zugangsschwellenwert ist, $\eta_1$ der erste Zugangsschwellenwert ist und f($x$) der Zugangsschwellenwert-Anpassungsbetrag ist.

3. Netzwerkvorrichtung nach einem der Ansprüche 1 und 2, wobei die Netzwerkvorrichtung ferner Folgendes umfasst:
eine Leistungsbestimmungseinheit (106), konfiguriert zum: Ermitteln eines Downlinkübermittlungsleistungs-Durchschnitts der Zelle über die zweite vorgegebene Dauer, nachdem die Empfangseinheit (104) die von dem Endgerät gesendete Zugangsanforderung empfangen hat; und Bestimmen, ob der Downlinkübermittlungsleistungs-Durchschnitt größer ist als ein Downlinkübermittlungsleistungs-Überlastungsschwellenwert, wobei die zweite Dauer kürzer ist als die erste Dauer; und, falls der Downlinkübermittlungsleistungs-Durchschnitt größer ist als der Downlinkübermittlungsleistungs-Überlastungsschwellenwert, Veranlassen, dass die Steuereinheit (105) eine Zugangssteuerung gemäß dem zweiten Zugangsschwellenwert an dem Endgerät durchführt; oder, falls der Downlinkübermittlungsleistungs-Durchschnitt nicht größer ist als der Downlinkübermittlungsleistungs-Überlastungsschwellenwert, dass die Steuereinheit (105) keine Zugangssteuerung an dem Endgerät durchführt.

4. Netzwerkvorrichtung nach einem der Ansprüche 1 bis 3, wobei, wenn die Steuereinheit (105) eine Zugangssteuerung gemäß dem zweiten Zugangsschwellenwert an dem Endgerät durchführt, die Steuereinheit (105), falls es dem Endgerät nicht gestattet ist, sich mit der Zelle zu verbinden, ein Verarbeiten auf eine der folgenden Weisen durchführt:
Versetzen des Endgeräts, dem es nicht gestattet ist, sich mit der Zelle zu verbinden, in einen CELL_FACH-Zustand, in einen CELL_PCH-Zustand oder in einen URA_PCH-Zustand; Versetzen des Endgeräts, dem es nicht gestattet ist, sich mit der Zelle zu verbinden, in einen IDLE-Zustand; oder Umleiten des Endgeräts, dem es nicht gestattet ist, sich mit der Zelle zu verbinden, zu einer der Zelle benachbarten Zelle.

**5.** Zugangssteuerungsverfahren, Folgendes umfassend:

Berechnen (501) einer Gesamtdiensterfüllung einer Zelle über eine erste Dauer;
Berechnen (502) eines Zugangsschwellenwert-Anpassungsbetrags basierend auf einer Differenz zwischen der Gesamtdiensterfüllung der Zelle und einem Gesamterfüllungssollwert;
Ändern (503) eines ersten Zugangsschwellenwerts der Zelle in einen zweiten Zugangsschwellenwert auf der Grundlage des Zugangsschwellenwert-Anpassungsbetrags;
Empfangen (504) einer von einem Endgerät gesendeten Zugangsanforderung; und
Durchführen (505) einer Zugangssteuerung an dem Endgerät gemäß dem zweiten Zugangsschwellenwert,
**dadurch gekennzeichnet, dass** ein Verfahren zum Berechnen der Gesamtdiensterfüllung der Zelle umfasst:

Berechnen der Gesamtdiensterfüllung der Zelle nach der Formel $Q = \dfrac{\sum_i a_i \lambda_i}{\sum_i k_i \beta_i}$ oder $Q = \sum_i \dfrac{a_i \lambda_i}{k_i \beta_i}$,

wobei $\sum_i a_i = 1$, $\sum_i k_i = 1$, $Q$ die Gesamtdiensterfüllung der Zelle ist, $i$ ein Diensttyp ist, $\lambda_i$ eine Anzahl von Einträgen zu Details von erfüllten Anrufen eines $i$-ten Diensttyps ist, eine Gewichtung der Anzahl von Einträgen zu Details von erfüllten Anrufen des i-ten Diensttyps ist, $\beta_i$ die Gesamtzahl von Einträgen zu Details von Anrufen des i-ten Diensttyps ist und $k_i$ die diensttypspezifische Gewichtung der Gesamtzahl von Einträgen zu Details von Anrufen des $i$-ten Diensttyps ist, wobei das Berechnen eines Zugangsschwellenwert-Anpassungswerts auf der Grundlage einer Differenz zwischen der Gesamtdiensterfüllung der Zelle und eines Gesamtdiensterfüllungs-Sollwerts Folgendes umfasst:
Berechnen der Differenz anhand einer Formel x=Q-Qo, wobei $x$ die Differenz ist, $Q$ die Gesamtdiensterfüllung der Zelle ist und $Q_0$ der Gesamtdiensterfüllungs-Sollwert ist; und

Berechnen des Zugangsschwellenwert-Anpassungswerts anhand einer Formel $f(x) = \sum_j n_j * x^j$,

wobei f(x) der Zugangsschwellenwert-Anpassungswert ist, $j$ eine Ganzzahl ist und $n_j$ ein Koeffizient eines Terms $x^j$ ist oder
Berechnen des Zugangsschwellenwert-Anpassungswert anhand einer Formel

$$f(x) = \begin{cases} \sum_j p_j * x^j, & A_0 \le x < A_1 \\ \sum_j l_j * x^j, & A_1 \le x < A_2 \\ \quad \cdots\cdots \\ \sum_j m_j * x^j, & A_{N-1} \le x < A_N \end{cases},$$

wobei $A_0$ bis $A_N$ spezifische Werte der Differenz sind, $p_j$ ein Koeffizient eines Terms $x^j$ in einem Bereich $[A_0, A_1)$ ist, $l_j$ ein Koeffizient des Terms $x^j$ in einem Bereich $[A_1, A_2)$ ist und $m_j$ ein Koeffizient des Terms $x^j$ in einem Bereich $[A_{N-1}, A_N)$ ist.

**6.** Verfahren nach Anspruch 5, wobei das Ändern, auf der Grundlage des Zugangsschwellenwert-Anpassungswert, eines ersten Zugangsschwellenwerts der Zelle in einen zweiten Zugangsschwellenwert umfasst:
Berechnen des zweiten Zugangsschwellenwerts anhand einer Formel $\eta_2 = \eta_1 + f(x)$, wobei $\eta_2$ der zweite Zugangsschwellenwert ist, $\eta_1$ der erste Zugangsschwellenwert ist und f(x) der Zugangsschwellenwert-Anpassungswert ist.

**7.** Verfahren nach einem der Ansprüche 5 und 6, nach dem Empfangen einer von einem Endgerät gesendeten Zugangsanforderung ferner Folgendes umfassend:

Ermitteln eines Downlinkübermittlungsleistungs-Durchschnitts der Zelle in der zweiten vorgegebenen Dauer;

und Bestimmen, ob der Downlinkübermittlungsleistungs-Durchschnitt größer ist als ein Downlinkübermittlungsleistungs-Überlastungsschwellenwert, wobei die zweite Dauer kürzer ist als die erste Dauer; und

falls der Downlinkübermittlungsleistungs-Durchschnitt größer ist als der Downlinkübermittlungsleistungs-Überlastungsschwellenwert, Durchführen einer Zugangssteuerung an dem Endgerät gemäß dem zweiten Zugangsschwellenwert; oder

falls der Downlinkübermittlungsleistungs-Durchschnitt nicht größer ist als der Downlinkübermittlungsleistungs-Überlastungsschwellenwert, Überspringen des Durchführens einer Zugangssteuerung an dem Endgerät.

## Revendications

1. Dispositif réseau (100) comprenant :

une première unité de calcul (101) configurée pour calculer une satisfaction globale de service d'une cellule dans une première durée prédéfinie ;
une seconde unité de calcul (102) configurée pour calculer un degré d'ajustement de seuil d'admission sur la base d'une différence entre la satisfaction globale de service de la cellule et une valeur cible de satisfaction globale ;
une unité d'ajustement de seuil (103) configurée pour changer un premier seuil d'admission de la cellule en un second seuil d'admission selon le degré d'ajustement de seuil d'admission ;
une unité de réception (104) configurée pour recevoir une demande d'accès envoyée par un terminal ; et
une unité de commande (105) configurée pour réaliser la commande d'admission sur le terminal selon le second seuil d'admission,
**caractérisé en ce que** la première unité de calcul (101) est plus particulièrement configurée pour :

calculer la satisfaction globale de service de la cellule selon la formule $Q = \dfrac{\sum_i a_i \lambda_i}{\sum_i k_i \beta_i}$ ou $Q = \sum_i \dfrac{a_i \lambda_i}{k_i \beta_i}$ ,

dans laquelle $\sum_i a_i = 1$ , $\sum_i k_i = 1$ , $Q$ est la satisfaction globale de service de la cellule, $i$ est un type

de service, $\lambda_i$ est une quantité d'enregistrements détaillés d'appels satisfaits d'un $i^{ème}$ type de service, $\alpha_i$, est un poids de la quantité d'enregistrements détaillés d'appels satisfaits du $i^{ème}$ type de service, $\beta_i$ est une quantité totale d'enregistrements détaillés d'appels du $i^{ème}$ type de service, et $k_i$ est un poids de la quantité totale d'enregistrements détaillés d'appels du $i^{ème}$ type de service, la seconde unité de calcul (102) étant plus particulièrement configurée pour :
calculer la différence selon une formule $x = Q - Q_0$, dans laquelle $x$ est la différence, $Q$ est la satisfaction globale de service de la cellule, et $Q_0$ est la valeur cible de satisfaction globale ; et

calculer le degré d'ajustement de seuil d'admission selon une formule $f(x) = \sum_j n_j * x^j$ , dans laquelle f(x) est le degré d'ajustement de seuil d'admission, j est un nombre entier et $n_j$ est un coefficient d'un terme $x^j$ ; ou

calculer le degré d'ajustement de seuil d'admission selon la formule $f(x) = \begin{cases} \sum_j p_j * x^j, & A_0 \le x < A_1 \\ \sum_j l_j * x^j, & A_1 \le x < A_2 \\ \quad \cdots\cdots \\ \sum_j m_j * x^j, & A_{N-1} \le x < A_N \end{cases}$ dans

laquelle $A_O$ à $A_N$ sont des valeurs spécifiques de la différence, $p_j$ est un coefficient d'un terme $X_j$ dans une plage $[A_O, A_1)$, $l_j$ est un coefficient du terme $x^j$ dans une plage $[A_1, A_2)$, et $m_j$ est un coefficient du terme $x^j$ dans une plage $[A_{N-1}, A_N)$.

2. Dispositif réseau selon la revendication 1, dans lequel l'unité d'ajustement de seuil (103) est configurée plus particulièrement pour :

calculer le second d'admission selon une formule $\eta_2 = \eta_1 + f(x)$, dans laquelle $\eta_2$ est le second seuil d'admission, $\eta_1$ est le premier seuil d'admission et f(x) est le degré d'ajustement de seuil d'admission.

3. Dispositif réseau selon l'une quelconque des revendications 1 et 2, le dispositif réseau comprenant en outre : une unité de détermination de la puissance (106), configurée pour: obtenir, après la réception par l'unité de réception (104) de la demande d'accès envoyée par le terminal, une moyenne de puissance d'émission de liaison descendante de la cellule qui se trouve dans la seconde durée prédéfinie ; déterminer si la moyenne de puissance d'émission de liaison descendante est supérieure à un seuil d'encombrement de puissance d'émission de liaison descendante, la seconde durée prédéfinie étant inférieure à la première durée prédéfinie ; et déclencher, si la moyenne de puissance d'émission de liaison descendante est supérieure au seuil d'encombrement de puissance d'émission de liaison descendante, l'unité de commande (105) pour réaliser une commande d'admission sur le terminal selon le second seuil d'admission ; ou si la moyenne de puissance d'émission de liaison descendante n'est pas supérieure au seuil d'encombrement de puissance d'émission de liaison descendante, l'unité de commande (105) ne réalise pas de commande d'admission sur le terminal.

4. Dispositif réseau selon l'une quelconque des revendications 1 à 3, dans lequel, lorsque l'unité de commande (105) réalise une commande d'admission sur le terminal selon le second seuil d'admission, si le terminal n'est pas autorisé à se connecter à la cellule, l'unité de commande (105) réalise un traitement de l'une quelconque des manières suivantes : en réglant le terminal qui n'est pas autorisé à se connecter à la cellule à un état CELL_FACH, un état CELL_PCH ou un état URA_PCH ; en réglant le terminal qui n'est pas autorisé à se connecter à la cellule à un état IDLE ; ou en redirigeant le terminal qui n'est pas autorisé à se connecter à la cellule vers une cellule voisine de la cellule.

5. Procédé de commande d'admission, comprenant :

le calcul (501) d'une satisfaction globale de service d'une cellule dans une première durée prédéfinie ;
le calcul (502) d'un degré d'ajustement de seuil d'admission sur la base d'une différence entre la satisfaction globale de service de la cellule et une valeur cible de satisfaction globale ;
le changement (503) d'un premier seuil d'admission de la cellule en un second seuil d'admission selon le degré d'ajustement de seuil d'admission ;
la réception (504) d'une demande d'accès envoyée par un terminal ; et
la réalisation (505) de la commande d'admission sur le terminal selon le second seuil d'admission,
**caractérisé en ce**
**qu'**un procédé servant à calculer la satisfaction globale de service de la cellule comprend :

le calcul de la satisfaction globale de service de la cellule selon la formule $Q = \dfrac{\sum_i a_i \lambda_i}{\sum_i k_i \beta_i}$ ou $Q = \sum_i \dfrac{a_i \lambda_i}{k_i \beta_i}$

, dans laquelle $\sum_i a_i = 1$, $\sum_i k_i = 1$, $Q$ est la satisfaction globale de service de la cellule, $i$ est un type de service, $\lambda_i$ est une quantité d'enregistrements détaillés d'appels satisfaits d'un $i^{ème}$ type de service, $\alpha_i$ est un poids de la quantité d'enregistrements détaillés d'appels satisfaits du $i^{ème}$ type de service, $\beta_i$ est une quantité totale d'enregistrements détaillés d'appels du $i^{ème}$ type de service, et $k_i$ est un poids de la quantité totale d'enregistrements détaillés d'appels du $i^{ème}$ type de service, le calcul d'un degré d'ajustement du seuil d'admission sur la base d'une différence entre la satisfaction globale de service et une valeur cible de satisfaction globale comprend :
le calcul de la différence selon une formule $x = Q - Q_0$, dans laquelle $x$ est la différence, $Q$ est la satisfaction globale de service de la cellule, et $Q_0$ est la valeur cible de satisfaction globale ; et

le calcul du degré d'ajustement de seuil d'admission selon la formule $f(x) = \sum_j n_j * x^j$ dans laquelle f(x) est le degré d'ajustement de seuil d'admission, j est un nombre entier, et $\eta_j$ est un coefficient d'un terme $x^j$ ; ou

le calcul du degré d'ajustement de seuil d'admission selon la formule

$$f(x) = \begin{cases} \sum_j p_j * x^j, A_0 \leq x < A_1 \\ \sum_j l_j * x^j, A_1 \leq x < A_2 \\ \cdots\cdots \\ \sum_j m_j * x^j, A_{N-1} \leq x < A_N \end{cases}$$

dans laquelle $A_O$ à $A_N$ sont des valeurs spécifiques de la différence, $p_j$ est un coefficient d'un terme $x^j$ dans une plage $[A_O, A_1)$, $l_j$ est un coefficient du terme $x^j$ dans une plage $[A_1, A_2)$ et $m_j$ est un coefficient du terme $x^j$ dans une plage $[A_{N-1}, A_N)$.

6. Procédé selon la revendication 5, dans lequel le changement d'un premier seuil d'admission de la cellule en un second seuil d'admission selon le degré d'ajustement du seuil d'admission comprend :
le calcul du second seuil d'admission selon la formule $\eta_2 = \eta_1 + f(x)$, dans laquelle $\eta_2$ est le second seuil d'admission, $\eta_1$ est le premier seuil d'admission et f(x) est le degré d'ajustement de seuil d'admission.

7. Procédé selon l'une quelconque des revendications 5 et 6, dans lequel, après la réception d'une demande d'accès envoyée par un terminal, le procédé comprend en outre :

l'obtention d'une moyenne de puissance d'émission de liaison descendante de la cellule qui se trouve dans la seconde durée prédéfinie ; et le fait de déterminer si la moyenne de puissance d'émission de liaison descendante est supérieure à un seuil d'encombrement de puissance d'émission de liaison descendante, la seconde durée prédéfinie étant inférieure à la première durée prédéfinie ; et
la réalisation, si la moyenne de puissance d'émission de liaison descendante est supérieure au seuil d'encombrement de puissance d'émission de liaison descendante, d'une commande d'admission sur le terminal selon le second seuil d'admission ; ou
l'omission de la réalisation de la commande d'admission sur le terminal si la moyenne de puissance d'émission de liaison descendante n'est pas supérieure au seuil d'encombrement de la puissance d'émission de liaison descendante.

100

Network device

106

Power determining unit

101　　　102　　　103　　　104　　　105

| First calculation unit | Second calculation unit | Threshold adjustment unit | Receiving unit | Control unit |

FIG. 1

200

Network device

201　　　202　　　203

| Memory | Processor | Receiver |

FIG. 2

300

Network device

301

Calculation unit

302

Processing unit

FIG. 3

400

Network device

401

Memory

402

Processor

FIG. 4

Calculate an overall service satisfaction of a cell in first preset duration, where the overall service satisfaction of the cell is a weighted sum of satisfactions with all types of services in the cell — 501

Calculate an admission threshold adjustment amount based on a difference between the overall service satisfaction and an overall satisfaction target value — 502

Change a first admission threshold of the cell to a second admission threshold according to the admission threshold adjustment amount — 503

Receive an access request sent by a terminal — 504

Perform admission control on the terminal according to the second admission threshold — 505

FIG. 5

Calculate an overall service satisfaction of a cell in preset duration, where the overall service satisfaction of the cell is a weighted sum of satisfactions with all types of services in the cell — 601

When the overall service satisfaction of the cell is less than a service experience minor congestion threshold and greater than a service experience severe congestion threshold, redirect a first preset quantity of first preset terminals in the cell to a neighboring cell satisfying a preset condition — 602

FIG. 6

**EP 3 277 018 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013032738 A1